# EUROPÄISCHE PATENTSCHRIFT

(11) **EP 3 607 214 B1**
(45) Veröffentlichungstag und Bekanntmachung des Hinweises auf die Patenterteilung: **25.08.2021**
(21) Anmeldenummer: 18717002.2
(22) Anmeldetag: 05.04.2018
(51) Int. Cl.: F16B 41/00

(54) **BEFESTIGUNGSMITTEL UND SYSTEM ZUR VORMONTAGE EINES STIFTFÖRMIGEN VERBINDUNGSELEMENTES**
SECURING MEANS AND SYSTEM FOR PRE-MOUNTING A PENCIL-SHAPED CONNECTING ELEMENT
MOYEN DE FIXATION ET SYSTÈME DE PRÉMONTAGE D'UN ÉLÉMENT DE LIAISON EN FORME DE TIGE

(30) Priorität: 05.04.2017 DE 102017107353
(43) Veröffentlichungstag der Anmeldung: 12.02.2020
(73) Patentinhaber: Honsel Umformtechnik GmbH, 58730 Fröndenberg (DE)
(72) Erfinder: FRANKE, Timo, 59469 Ense (DE); KIRCHHOFF, Peter, 59469 Ense (DE)
(74) Vertreter: Braun-Dullaeus Pannen Emmerling Patent- & Rechtsanwaltspartnerschaft mbB
(86) Internationale Anmeldenummer: PCT/EP2018/058721
(87) Internationale Veröffentlichungsnummer: WO 2018/185217

(56) Entgegenhaltungen:
- DE-A1-102008 030 801
- DE-T5-112010 002 979
- DE-T5-112012 001 820
- US-A- 5 395 194

## Beschreibung

Die Erfindung betrifft ein Befestigungsmittel zur Vormontage eines stiftförmigen Verbindungselementes, insbesondere eine Schraube, in einer in einem Bauteil vorgesehenen Durchgangsöffnung. Zum Halt des Verbindungselementes weist das Befestigungsmittel eine zylindermantelförmige Hülse und eine Mehrzahl nach innen vorstehender Halteelemente an der Innenseite der Hülse auf. Die Erfindung betrifft zudem ein System bestehend aus einem solchen Befestigungsmittel und einem im Spritzguss- oder im Druckgussverfahren hergestellten Bauteil mit einer Durchgangsbohrung.

Aus dem US 5,395,194 ist ein als Hülse ausgebildetes Befestigungsmittel bekannt, das in Umfangsrichtung abwechselnd nach außen und nach innen gewölbte Abschnitte aufweist. Dabei halten die nach außen gewölbten Abschnitte das Befestigungsmittel kraftschlüssig in der Bohrung, während die nach innen gewandten Abschnitte eine eingesetzte Schraube kraftschlüssig halten. Damit die Hülse nicht zu tief in die Durchgangsbohrung hineinrutscht, ist in der Bohrung eine Stufe vorgesehen, an der sich die in Einsteckrichtung vordere Stirnseite der Hülse abstützt. Das Erfordernis der Stufe macht die Herstellung der Bohrung aufwendig.

Aus der DE 10 2009 016 633 A1 ist ein ähnliches Befestigungsmittel bekannt, das neben den nach innen vorstehenden Halteelementen, die das vormontierte Verbindungselement halten, zusätzlich an beiden Enden der Hülse nach außen vorstehende weitere Halteelemente aufweist. Diese sind elastisch verformbar, so dass sie beim Einsetzen des Befestigungsmittels in die Durchgangsbohrung zunächst eine Ausweichbewegung ausführen können. Zudem verhindern diese nach außen vorstehenden Halteelemente, die die Ränder der Durchgangsbohrung hintergreifen, ein axiales Verschieben des in der Durchgangsbohrung eingesetzten Befestigungsmittels bei der Vormontage und bei der späteren Endmontage des Verbindungselementes. Um das Hintergreifen der nach Außen vorstehenden Halteelemente zu ermöglichen, müssen die Durchgangsbohrungen in den Bauteilen in einem zusätzlichen Arbeitsschritt spanabhebend nachgearbeitet werden.

Aus der DE 10 2008 030 801 A1 ist eine Axialsicherung einer in einem Bauteil zu montierenden Schraube bekannt. Diese weist ein Ringelement auf, das mit außen angebrachten Rastnasen einen in dem Bauteil vorgesehenen und im Hinblick auf das Ringelement speziell dimensionierten Absatz hintergreift. Dieses Ringelement ist für die Vormontage einer Schraube nur bedingt geeignet, da die Schraube keinen festen Halt im Ringelement hat. Zudem macht das Vorsehen des speziell dimensionierten Absatzes im Bauteil den Einsatz der Axialsicherung unkomfortabel.

Die Aufgabe der Erfindung liegt nunmehr darin, ein einfach und kostengünstig zu fertigendes Befestigungsmittel vorzuschlagen, mit dem das vormontierte Verbindungselement sicher in der Durchgangsbohrung des Bauteils gehalten wird. Zudem ist es die Aufgabe, ein System umfassend ein derartiges Befestigungsmittel und ein mit einer Durchgangsbohrung versehenes und dabei einfach herzustellendes Bauteil zu schaffen.

Gelöst werden diese Aufgaben durch das Befestigungsmittel nach Anspruch 1 und das System nach Anspruch 9. Die Unteransprüche beschreiben jeweils vorteilhafte Ausführungsformen.

Der Grundgedanke der Erfindung liegt darin, in die flächige Außenwand des als Hülse gestalteten Befestigungsmittels eine Ausnehmung derart einzubringen, dass in dieser ein in der Durchgangsöffnung befindlicher respektive bei der Herstellung verbliebener Ansatz während der Vormontage einrastet. Dabei erstreckt sich die flächige Außenwand über einen Großteil der Länge der Hülse und hat einen im wesentlichen kreisrunden Querschnitt, der jedoch insbesondere von den nach innen vorstehenden Halteelementen unterbrochen sein kann. Unter Anlage der flächigen Außenwand wird die Hülse in die Durchgangsöffnung des Bauteils eingeführt. Mit einer solchen flächigen Außenwand kann die Hülse ohne zu verkanten mit großer Anlagefläche in die Durchgangsöffnung eingeführt werden und ist dann sicher darin gehalten. Die Hülse hat entsprechend einen flächigen Kontakt zur Bohrung und liegt nicht nur an wenigen Haltepunkten und/oder den Ansatz an.

Mit dem solchermaßen in die Ausnehmung eingerasteten Ansatz ist das erfindungsgemäße Befestigungsmittel mit dem darin eingesteckten Verbindungsmittel, insbesondere mit der eingesteckten Schraube, gegen axiales Herausrutschen aus der Durchgangsbohrung gesichert. Um diese Funktion zur ermöglichen, muss die Ausnehmung entsprechend so gestaltet sein, dass sie in axialer Richtung jeweils beidseitig einen Anschlag aufweist. Die Ausnehmung ist daher vorteilhafterweise als senkrecht zur Achse der Hülse verlaufender Schlitz in der Außenwand der Hülse ausgebildet.

Die Besonderheit des erfindungsgemäßen Befestigungsmittels ist, dass es auf die aus dem Stand der Technik bekannten nach außen und/oder nach innen stehenden Rastnasen verzichtet. Dadurch verringert sich einerseits das Risiko der Spanbildung beim Eindrücken des Befestigungsmittels in die Durchgangsbohrung. Zum anderen kann durch Verzicht auf nach innen stehende Rastnasen ein sicherer und axial frei positionierbarer Halt des Verbindungsmittels gewährleistet werden.

Ein wesentlicher Gesichtspunkt der Erfindung liegt darin, dass es mit dieser Gestaltung des Befestigungsmittels möglich wird, die Durchgangsbohrungen in Bauteilen auf eine besonders einfache Art zu erzeugen und dabei auf spanabhebende Nacharbeitung zu verzichten. Schließlich kommen als Bauteile mit vormontierten Verbindungsmitteln solche in Betracht, die in einem Druck- oder Spritzgussverfahren hergestellt sind. Dabei werden Durchgangsbohrungen regelmäßig mittels zweier Kernzüge geformt, die beim Entformen auseinander gezogen werden. Meist verbleibt nach dem Entformen ein ringförmiger Ansatz, der im Stand der Technik durch einen nachbearbeitenden Schritt, beispielsweise durch ein Bohren oder Stanzen, entfernt werden muss. Erfindungsgemäß wird dieser verbleibende ringförmige Ansatz jedoch nicht entfernt sondern genutzt, um dem Befestigungsmittel einen Halt zu geben. Im Prinzip reicht es aus, den bei der Produktion mitunter zwangsläufig verbleibenden Absatz zu nutzen. Es ist jedoch vorteilhaft, im Hinblick auf das erfindungsgemäße Befestigungsmittel die die Kernzüge so zu gestalten, dass ein definierter insbesondere ringförmiger Absatz in der Durchgangsbohrung verbleibt.

Die Erfindung manifestiert sich demnach auch in der Verwendung dieses verbleibenden Absatzes und damit in einem System aufweisend ein Befestigungsmittel mit erfindungsgemäßer Ausnehmung und aufweisend ein in einem Gussverfahren hergestelltes Bauteil mit mindestens einer Durchgangsbohrung, die durch zwei Kernzüge geformt ist, die beim Entformen einen ringförmigen Ansatz in der Durchgangsbohrung hinterlassen. Der verbleibende ringförmige Ansatz rastet dann in die Ausnehmung, insbesondere in den Schlitz, ein, wobei im Falle eines Bauteils aus Kunststoff insbesondere der ringförmige Ansatz und im Falle eines Bauteils aus Metall insbesondere die Geometrie der Hülse zum Einrasten nachgibt.

Generell kann die erfindungsgemäße Hülse eine beliebig gestaltete flächige Außenwand haben. Diese kann beispielsweise eckig oder gewellt sein. Erfindungsgemäß ist die Hülse zylindermantelförmig, wobei die Ausnehmung in Umfangsrichtung in die Außenwand des Zylindermantels eingebracht ist. Der Zylindermantel hat vorteilhafterweise einen entsprechend der Durchgangsöffnung kreisförmigen Querschnitt.

In einer besonders zu bevorzugenden Ausführungsform hat das Befestigungsmittel die in dem US 5,395,194 beschriebene Grundform mit in Umfangsrichtung abwechselnd nach innen gewölbten Abschnitten ("Einwölbungen") und nach außen gewölbten Abschnitten ("Auswölbungen"), wobei die Oberflächen der Auswölbungen auf einem gedachten Kreis liegen. Dabei bilden die konkaven Einwölbungen der Außenwand die nach Innen vorstehenden Halteelemente. In Bezug auf den gedachten Kreis verbleiben die Auswölbungen gewissermaßen in der Außenwand der Hülse. Um eine möglichst einfache Herstellung und einen guten Halt des Verbindungsmittels in dem Befestigungsmittel und des Befestigungsmittels in der Durchgangsbohrung zu gewährleisten, ist es vorteilhaft, wenn die Einwölbungen und die Auswölbungen über die gesamte Höhe der Hülse verlaufen.

Die Einwölbungen halten das Verbindungsmittel zuverlässig durch Kraftschluss in beliebiger Position. Dieser zuverlässige Halt macht eine Vormontage des Verbindungsmittels in der Hülse möglich, bevor das System aus Verbindungsmittel und Hülse zu einem späteren Zeitpunkt in die Durchgangsöffnung eingesteckt wird. Mit den flächigen Einwölbungen wird ein Einrasten in das Gewinde einer Schraube vermieden. Jede Schraube wird über den Kraftschluss positionsunabhängig und sicher gehalten.

Die Flächen, die durch die konkaven Einwölbungen der Außenwand entstehen, bieten sich für die Aufbringung einer informativen Beschriftung, beispielsweise dem Werkstoff, einer Nestkennzeichnung und/oder einem Datum, an. Der Vorteil liegt darin, dass diese Flächen nicht mit der Bohrungswand in Kontakt kommen und daher das Risiko der Spanbildung reduziert ist.

In einer besonders bevorzugten Ausführungsform wird die Ausnehmung von einem bezüglich des gedachten Kreises verlaufenden Schlitz gebildet, der die Auswölbungen auf einem entsprechenden Umfang unter Auslassung der Einwölbungen durchzieht. Dieser Schlitz ist vorteilhafterweise nicht nur auf der Oberfläche der Außenwandung ausgebildet, sondern durchdringt deren Material, ist somit durchgängig. Wegen dieser "partiellen" Schlitze in der Mantelfläche der Hülse, rastet das Befestigungsmittel in der entsprechenden Durchgangsöffnung des Bauteils ein. Hierdurch wird es unverlierbar in die Durchgangsöffnung eingebracht.

Um die spätere Zuführung und die Vormontage zu vereinfachen, ist es besonders vorteilhaft, das Befestigungsmittel bezüglich des über den Umfang verlaufenden Schlitzes symmetrisch zu gestalten. Dazu verläuft der Schlitz in der mittleren Höhe und teilt die Hülse optisch in zwei identische Teile. Durch die mittige Positionierung des Schlitzes steckt das Befestigungsmittel mindestens zu ¼ in der Bohrung, bevor die Einrastfunktion beginnt. Dadurch wird das Befestigungsmittel sicher geführt, so dass Verkantungen beim Aufbringen der Einklipskraft vermieden werden.

Das Befestigungsmittel respektive die Hülse ist bevorzugter Weise je nach Einsatz entweder einstückig aus einem Kunststoff gespritzt oder druckgegossen; die Hülse kann auch aus einem Metall gefertigt sein. Auf diese Weise können die Befestigungsmittel kostengünstig in großer Zahl hergestellt werden, wobei die besondere Form der Befestigungsmittel eine Herstellung ohne eine Nachbearbeitung ermöglicht.

Um die aus der Form der Hülse resultierende Flexibilität zu erhöhen und damit das Einklipsen in die Durchgangsbohrung weiter zu vereinfachen, kann es von Vorteil sein, die Wand der Hülse von einem Ende zum anderen Ende zu schlitzen, so dass sich der Durchmesser bei einem Druck von außen etwas verringern kann. Idealerweise hat ein solcher Schlitz eine axiale Ausrichtung und ist im Bereich einer Einwölbung eingebracht. Dabei wird der Schlitz vorteilhafterweise schon während des Gießens der Hülse hergestellt und nicht nachträglich eingebracht.

Die besonderen Vorteile des Befestigungsmittels respektive der erfindungsgemäß geformten Hülse liegen auch darin, dass ein eingestecktes Verbindungsmittel, insbesondere eine Schraube, mit einer definierten Kraft in der Hülse axial bewegt werden kann, ohne das die Hülse aus der Bohrung gezogen respektive gedrückt wird. Zudem kann die Schraube in jeder beliebigen Position arretiert werden. Eine Besonderheit der erfindungsgemäßen Geometrie liegt auch darin, dass die Hülse einzeln auch ohne Schraube mit einer definierten Kraft in die Bohrung eingedrückt werden kann. Durch diese spezielle Geometrie erhöht sich der Formschluss des Befestigungsmittels im Bauteil.

Ein weiterer Vorteil ist, dass das Befestigungsmittel auf dem Schaftbereich der Schraube vormontiert sein und die vormontierte "Schraube-Hülse-Verbindung" in einem Arbeitsgang in die Bohrung eingedrückt werden kann.

Weitere Merkmale und Vorteile ergeben sich aus der nachfolgenden Beschreibung anhand der Figuren. Es zeigen:
- **Figur 1**: ein Befestigungsmittel in perspektivischer Ansicht und
- **Figur 2**: ein Befestigungsmittel in einer Durchgangsbohrung eines Bauteils.

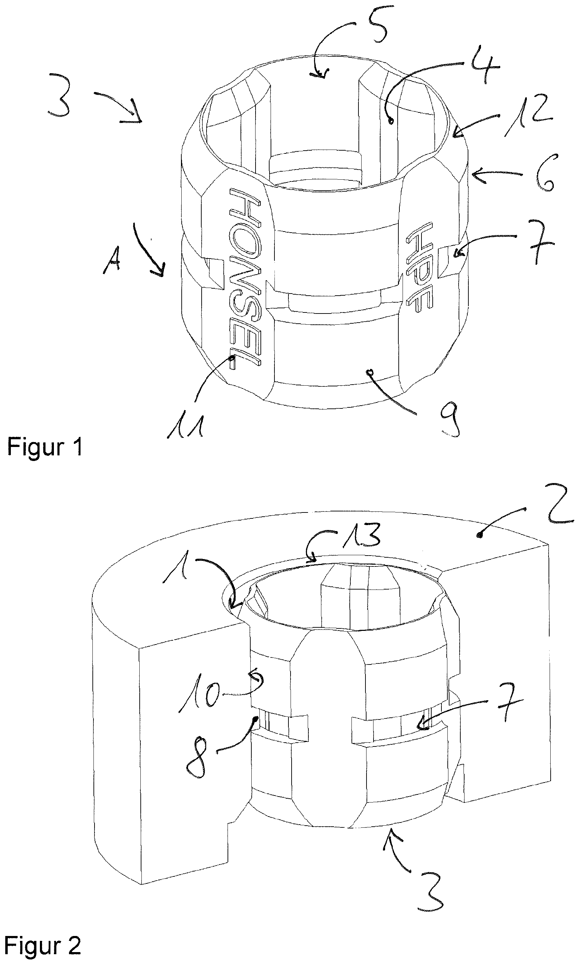

Figur 1 zeigt ein symmetrisches Befestigungsmittel zur Vormontage eines nicht dargestellten stiftförmigen Verbindungsmittels, insbesondere einer Schraube, in einer Durchgangsöffnung 1 eines in Figur 2 aufgeschnittenen gezeigten Bauteils 2. Das Befestigungsmittel ist eine einstückig aus Kunststoff gespritzte zylindrische Hülse 3, die vier nach innen vorstehende Halteelemente 4 in Form von Einwölbungen an der Innenwand 5 aufweist. Die Schraube wird in bekannter Weise in die Bohrung der Hülse 3 eingesteckt und von den Halteelementen 4 kraftschlüssig gehalten.

Erfindungsgemäß hat die Hülse 3 in ihrer Außenwand 6 eine Ausnehmung 7 zum rastenden Eingriff eines in der Durchgangsöffnung 1 befindlichen ringförmigen Ansatzes 8 (Figur 2). Das Einrasten geschieht beim Einstecken der Hülse in die Durchgangsbohrung 1 im Zuge der Vormontage. In dem gezeigten Ausführungsbeispiel hat die Hülse 3 eine zylindermantelförmige Kontur. Die Ausnehmung 7 ist dementsprechend in Umfangsrichtung (Pfeil A) in die Außenwand 6 der Hülse 3 eingebracht.

Ersichtlich bilden die konkaven Einwölbungen der Außenwand 6 die nach innen vorstehenden Halteelemente 4, wobei in der Außenwand 6 entsprechend vier Auswölbungen 9 verbleiben, deren Außenflächen an der Innenwandung 10 der Durchgangsbohrung 1 anliegen. Um einen stabilen Halt der Hülse 3 in der Durchgangsbohrung 1 und eine zuverlässige Fixierung der Schraube in der Hülse 3 zu gewährleisten, verlaufen die Einwölbungen und die Auswölbungen 9 über die gesamte Höhe der Hülse 3.

Wie aus den Figuren hervorgeht, weisen die Strukturen der Hülse 3, nämlich die Einwölbungen und die Auswölbungen 9, eine Rotationssymmetrie in einer 90° Teilung auf. Die Ausnehmung 7 wird dabei von einem auf einem gedachten Umfang der Hülse 3 umlaufenden Schlitz im Material der vier Auswölbungen 9 gebildet, wobei der Schlitz die Auswölbungen 9 durchsticht, mithin durchgängig ist. Der Schlitz ist jedoch nicht so tief, dass er das Material der Einwölbungen beeinträchtigt. Zudem verläuft der Schlitz in der mittleren Höhe und teilt die Hülse 3 optisch in zwei gleiche Teile. Der Schlitz liegt somit in der Symmetrieebene der Hülse, die in beiden Orientierungen in die Durchgangsöffnung eingesteckt werden kann.

Die Flächen, die durch die konkaven Einwölbungen an der Außenwand entstehen, sind mit einer kennzeichnenden Beschriftung 11 - hier "HONSEL" und "HPF" - versehen.

Um ein einfaches und sicheres Einstecken der Hülse 3 in die Durchgangsbohrung zu gewährleisten, ist an beiden Enden der Hülse 3 jeweils eine Fase 12 ausgebildet. Auch die Durchgangsbohrung weist eine Fase 13 auf.

Aus Figur 2 ist das System umfassend das als Hülse 3 ausgebildete Befestigungsmittel und das Bauteil 2 mit einer Durchgangsbohrung 1 ersichtlich, wobei das Bauteil 2 in einem Gussverfahren hergestellt ist. Bei der Herstellung des Bauteils 2 wird die Durchgangsbohrung 1 mittels zweier Kernzüge geformt, die beim Entformen einen ringförmigen Ansatz 8 in der Durchgangsbohrung 1 hinterlassen. Die Geometrie und die Lage des ringförmigen Ansatzes 8 wird durch die Stoßflächen und die Anordnung der Kernzüge festgelegt und kann entsprechend definiert werden. Im vorliegenden Fall befindet sich der ringförmige Ansatz 8 in der Mitte der Durchgangsbohrung 1. Der solchermaßen ausgebildete ringförmige Ansatz 8 rastet in die in der Außenwand der Hülse befindliche Ausnehmung 7 beim Einstecken der Hülse 3 in die Durchgangsbohrung 1 ein.

## Patentansprüche

1. Befestigungsmittel zur Vormontage eines stiftförmigen Verbindungsmittels in einer Durchgangsöffnung (1) eines Bauteils (2), wobei das Befestigungsmittel eine Hülse (3) und eine Mehrzahl nach innen vorstehender Halteelemente (4) an der Innenseite (5) der Hülse (3) aufweist,
wobei eine in einer flächigen Außenwand der Hülse (3) eingebrachte Ausnehmung (7) zum rastenden Eingriff eines in der Durchgangsöffnung (1) befindlichen Ansatzes (8) während der Vormontage vorgesehen ist,
**dadurch gekennzeichnet,**
**dass** die Hülse (3) zylindermantelförmig und die Ausnehmung (7) in Umfangsrichtung in die Außenwand eingebracht ist, wobei die Hülse symmetrisch bezüglich der Ausnehmung ist.

2. Befestigungsmittel nach Anspruch 1,
**dadurch gekennzeichnet, dass** konkave Einwölbungen der Außenwand die nach innen vorstehenden Halteelemente (4) ausbilden,
wobei in der Außenwand der Hülse (3) entsprechende Auswölbungen (9) verbleiben, wobei die Einwölbungen und die Auswölbungen (9) insbesondere über die gesamte Höhe der Hülse (3) verlaufen.

3. Befestigungsmittel nach Anspruch 2,
**dadurch gekennzeichnet, dass** die Ausnehmung (7)von einem insbesondere durchgängigen Schlitz gebildet wird, der die Auswölbungen (9) auf einem gedachten Umfang unter Auslassung der Einwölbungen durchzieht.

4. Befestigungsmittel nach Anspruch 3,
**dadurch gekennzeichnet, dass** der Schlitz in der mittleren Höhe verläuft und die Hülse optisch in zwei identische Teile teilt.

5. Befestigungsmittel nach einem der vorherigen Ansprüche,
**dadurch gekennzeichnet, dass** die Einwölbungen und die Auswölbungen (9) symmetrisch, insbesondere in 90° Teilung, um den Umfang der Hülse (3) herum angeordnet sind.

6. Befestigungsmittel nach einem der vorherigen Ansprüche,
**dadurch gekennzeichnet, dass** an beiden Enden der Hülse (3) jeweils eine Fase (12) ausgebildet ist.

7. Befestigungsmittel nach einem der vorherigen Ansprüche,
**dadurch gekennzeichnet, dass** die Hülse (3)einstückig aus Kunststoff gespritzt ist.

8. Befestigungsmittel nach einem der vorherigen Ansprüche,
**dadurch gekennzeichnet, dass** die Wandung der Hülse (3) von einem Ende zum anderen Ende von einem Schlitz unterbrochen ist,
der insbesondere in axialer Richtung verläuft.

9. System bestehend aus einem Befestigungsmittel nach einem der vorherigen Ansprüche und einem Bauteil (2) mit einer Durchgangsbohrung (1), wobei das Bauteil (2) in einem Spritz- oder Gussverfahren hergestellt ist,
**dadurch gekennzeichnet, dass** die Durchgangsbohrung (1) durch zwei Kernzüge geformt ist, die beim Entformen einen ringförmigen Ansatz (8) in der Durchgangsbohrung (1) hinterlassen, wobei der ringförmige Ansatz (8) in die in der Außenwand der Hülse (3) befindliche Ausnehmung (7) einrastet.

10. System nach Anspruch 9,
**dadurch gekennzeichnet, dass** der ringförmige Ansatz (8) sich in der Mitte der Durchgangsbohrung (1) befindet.

11. System nach Anspruch 9 oder 10,
**dadurch gekennzeichnet, dass** am Rand der Durchgangsbohrung (1) eine Fase (13) angeformt ist.

## Claims

1. Securing means for pre-mounting a pencil-shaped connecting element in a through opening (1) of a component (2), wherein the securing means has a sleeve (3) and a plurality of inwardly projecting holding elements (4) on the inner side (5) of the sleeve (3), wherein a recess (7) is provided, incorporated in a flat outer wall of the sleeve (3), for latching engagement during the pre-mounting of a stop (8), located in the through opening (1),
**characterized in that**
the sleeve (3) has a cylindrical jacket shape and the recess (7) is introduced in the outer wall in the circumferential direction, wherein the sleeve is symmetrical with respect to the recess.

2. Securing means according to claim 1,
**characterized in that**
concave indentations of the outer wall from the inwardly projecting holding elements (4), wherein corresponding bulges (9) remain in the outer wall of the sleeve (3), wherein the indentations and bulges (9) extend in particular across the entire height of the sleeve (3).

3. Securing means according to claim 2,
**characterized in that**
the recess (7) is formed in particular by a continuous slot, which runs through the bulges (9) on an imaginary periphery with the omission of the indentations.

4. Securing means according to claim 3,
**characterized in that**
the slot extends at mid-height and optically divides the sleeve into two identical parts.

5. Securing means according to one of the preceding claims,
**characterized in that**
the indentations and the bulges (9) are arranged symmetrically, in particular at a 90° pitch, around the periphery of the sleeve (3).

6. Securing means according to one of the preceding claims,
**characterized in that**
a chamfer (12) is respectively designed on the two ends of the sleeve (3).

7. Securing means according to one of the preceding claims,
**characterized in that**
the sleeve (3) is integrally injection molded from plastic material.

8. Securing means according to one of the preceding claims,
**characterized in that**
the wall of the sleeve (3) is interrupted from one end to the other end by a slot which extends in particular in the axial direction.

9. System comprising a securing means according to one of the preceding claims and a component (2) with a through hole (1), wherein the component (2) is produced in an injection molding or casting process,
**characterized in that**
the through hole (1) is formed by two core pullers, which leave behind an annular stop (8) in the through hole upon demolding, wherein the annular stop (8) engages into the recess (7) located in the outer wall of the sleeve (3).

10. System according to claim 9,
**characterized in that**
the annular stop (8) is located in the middle of the through hole (1).

11. System according to claim 9 or 10,
**characterized in that**
a chamfer (13) is shaped at the edge of the through hole (1).

## Revendications

1. Moyen de fixation pour le prémontage d'un élément de liaison en forme de tige dans une ouverture de passage (1) d'un composant (2), sachant que le moyen de fixation comporte un manchon (3) et une pluralité d'éléments de maintien (4) faisant saillie vers l'intérieur sur le côté intérieur (5) du manchon (3),
sachant qu'un évidement (7) disposé dans une paroi extérieure plane du manchon (3) est prévu pendant le prémontage pour la mise en prise par encliquetage d'un épaulement (8) se trouvant dans l'ouverture de passage (1),
**caractérisé en ce que**
le manchon (3) a la forme d'une enveloppe cylindrique et l'évidement (7) est disposé dans le sens périphérique dans la paroi extérieure, sachant que le manchon est symétrique par rapport à l'évidement.

2. Moyen de fixation selon la revendication 1,
**caractérisé en ce que**
des bombements concaves de la paroi extérieure constituent les éléments de maintien (4) faisant saillie vers l'intérieur, sachant que des convexités (9) correspondantes restent dans la paroi extérieure du manchon (3), sachant que les concavités et les convexités (9) passent en particulier sur toute la hauteur du manchon (3).

3. Moyen de fixation selon la revendication 2,
**caractérisé en ce que**
l'évidement (7) est formé par une fente en particulier générale, qui traverse les convexités (9) sur une périphérie considérée en négligeant les convexités.

4. Moyen de fixation selon la revendication 3,
**caractérisé en ce que**
la fente passe à hauteur médiane et divise optiquement le manchon en deux parties identiques.

5. Moyen de fixation selon l'une quelconque des revendications précédentes,
**caractérisé en ce que**
les concavités et les convexités (9) sont disposées symétriquement, en particulier en séparation à 90°, autour de la périphérie du manchon (3).

6. Moyen de fixation selon l'une quelconque des revendications précédentes,
**caractérisé en ce qu'**
un chanfrein (12) est respectivement constitué aux deux extrémités du manchon (3).

7. Moyen de fixation selon l'une quelconque des revendications précédentes,
**caractérisé en ce que**
le manchon (3) est moulé par injection en une seule pièce en matière plastique.

8. Moyen de fixation selon l'une quelconque des revendications précédentes,
**caractérisé en ce que**
la paroi du manchon (3) est interrompue d'une extrémité à l'autre par une fente, qui passe en particulier en direction axiale.

9. Système composé d'un moyen de fixation selon l'une quelconque des revendications précédentes et d'un composant (2) avec un trou de passage (1), sachant que le composant (2) est fabriqué dans un procédé d'injection ou de moulage,
**caractérisé en ce que**
le trou de passage (1) est formé par deux tire-noyau, qui lors du démoulage laissent un épaulement (8) de forme annulaire dans le trou de passage (1), sachant que l'épaulement (8) de forme annulaire vient s'enclencher dans l'évidement (7) se trouvant dans la paroi extérieure du manchon (3).

10. Système selon la revendication 9,
**caractérisé en ce que**
l'épaulement de forme annulaire (8) se trouve au centre du trou de passage (1).

11. Système selon la revendication 9 ou 10,
**caractérisé en ce qu'**
un chanfrein (13) est conformé au bord du trou de passage (1).
